# EUROPEAN PATENT APPLICATION

(11) **EP 2 517 865 A1**
(43) Date of publication of application: **31.10.2012**
(21) Application number: 12166085.6
(22) Date of filing: 27.04.2012
(51) Int. Cl.: B29C 73/06, B29C 63/34, B23P 6/00, B29C 70/88

(54) **Replacing an aperture in a laminated component**

(30) Priority: 28.04.2011 US 201113095995
(71) Applicant: United Technologies Corporation, Hartford, CT 06101 (US)
(72) Inventor: Holland, Brian Kenneth, Lansing, MI Michigan 48911 (US); Bogue, William, Hebron, CT Connecticut 06248 (US); Stewart, James H., Holt, MI Michigan 48842 (US)
(74) Representative: Tomlinson, Kerry John

(57) **Abstract**

An example method of replacing an aperture in a component includes placing layers of a filler material into a first aperture. The layers of the filler material arranged in a stacked relationship relative to each other within the first aperture. The method cures the filler material and establishes a second aperture that is at least partially defined by the filler material.

## Description

### BACKGROUND

This disclosure relates generally to laminated components and, more particularly, to replacing an aperture in a laminated component using stacked layers of a filler material.

Laminated components typically include one or more plies of compressed reinforcement fabric layers held together by a resin matrix, such as an epoxy. Many laminated components include apertures for fasteners, for airflow metering, or for acoustics.

Turbomachines include various laminated components, such as the cascades of a gas turbine engine. The cascades are used as part of a thrust reversing system. Fasteners extend through apertures in flanges of the cascades to secure the cascades within the gas turbine engine. Vibrations of the gas turbine engine can cause the fasteners to wear the fastener holes of the cascades, which can deform the apertures and cause the cascades to become loose. Apertures are sometimes misplaced in the cascades due to drilling the incorrect locations, for example.

Techniques have been developed to replace apertures, such as deformed or misplaced apertures. For example, in some laminated components, the plies are peeled back, cut off, and replaced as a structural restoration. A new aperture is then machined into the laminated component. This technique, however, is not useful for replacing apertures in laminated components like the cascade, because the flange area is not large enough to accommodate the peel back.

Another technique used to replace apertures involves securing a bushing within an existing aperture. However, bushings may have an undesirable thermal coefficient of expansion mismatch with the laminated structure. Further, bushing outer diameter geometry would require that additional removal of currently intact material from the flange, further weakening the laminate around the replacement aperture. Also, it is difficult to predict the performance of the bushing due to the anisotropic character of laminated materials. Another method for replacing an aperture involves application of epoxy resin to fill the space of the existing aperture. This method is also not robust in that voids are frequently observed. All of these conditions can result in premature failure of the repair material.

### SUMMARY

An example method of replacing an aperture in a component includes placing layers of a filler material into a first aperture. The layers of the filler material arranged in a stacked relationship relative to each other within the first aperture. The method cures the filler material and establishes a second aperture that is at least partially defined by the filler material.

In this example, the filler material is a calendered filler material that is filled with short fibers in random orientation to produce near isotropic properties in the cured structure. The calendered filler material is also machine mixed and mostly free of segregation or voids. The adhesion of the example calendered filler material is improved through use of a separate adhesive resin system optimized for adhesive strength rather than cohesive strength. The example adhesive resin is compatible with the cured laminate material as well as the uncured filler material. The example method compresses the filler in the direction normal to the stack to induce expansion pressure along the perimeter of the layers as the layers thin due to compression. This expansion pressure promotes the intimate contact of the filler with the entire perimeter of any regular or irregular shaped aperture.

An example laminated component repair method includes placing multiple layers of a repair material into a deformed aperture of a laminated component. The deformed aperture extends from a first surface of the laminated component to an oppositely facing second surface of the laminated component. The multiple layers are arranged in a stacked relationship relative to each other within the deformed aperture. The method compresses and cures the multiple layers of the repair material. The method then machines a repaired aperture that is at least partially defined by the repair material.

An example laminated component includes plies of compressed reinforcement fibers held together by a resin matrix. The laminated component has an apertured portion. The apertured portion defines an aperture extending along an axis from a first surface to an opposing second surface. The apertured portion includes layers of a compressed filler material that are arranged in a stacked relationship relative to each other prior to compression and then adhesively secured to other portions of the laminated component. The compressed filler material is different than the compressed reinforcement fibers.

### DESCRIPTION OF THE FIGURES

The various features and advantages of the disclosed examples will become apparent to those skilled in the art from the detailed description. The figures that accompany the detailed description can be briefly described as follows:
Figure 1 shows a cross-sectional view of an example turbomachine.
Figure 2 shows a perspective view of a plurality of cascades from the Figure 1 turbomachine.
Figure 3 shows a perspective view of one of the cascades in Figure 2.
Figure 4 shows a close-up view of a deformed aperture in the Figure 3 cascade.
Figure 5 shows the flow of an example method for replacing the Figure 4 deformed aperture.
Figure 6 shows a cross-sectional view of the deformed aperture at line I-I in Figure 4.
Figure 7 shows the deformed aperture of Figure 4 during an initial stage of the Figure 5 replacing method.
Figure 8 shows the deformed aperture of Figure 4 at a later stage of the Figure 5 replacing method than Figure 7.
Figure 9 shows the deformed aperture of Figure 4 at a later stage of the Figure 5 replacing method than Figure 8.
Figure 10 shows the deformed aperture of Figure 4 at a later stage of the Figure 5 replacing method than Figure 9.
Figure 11 shows the deformed aperture of Figure 4 at a later stage of the Figure 5 replacing method than Figure 10.
Figure 12 shows a replaced aperture in the Figure 3 cascade.
Figure 13 shows a test panel having an aperture that has been replaced using the Figure 5 method.
Figure 14 shows a cross-sectional view of the Figure 13 test panel.

### DETAILED DESCRIPTION

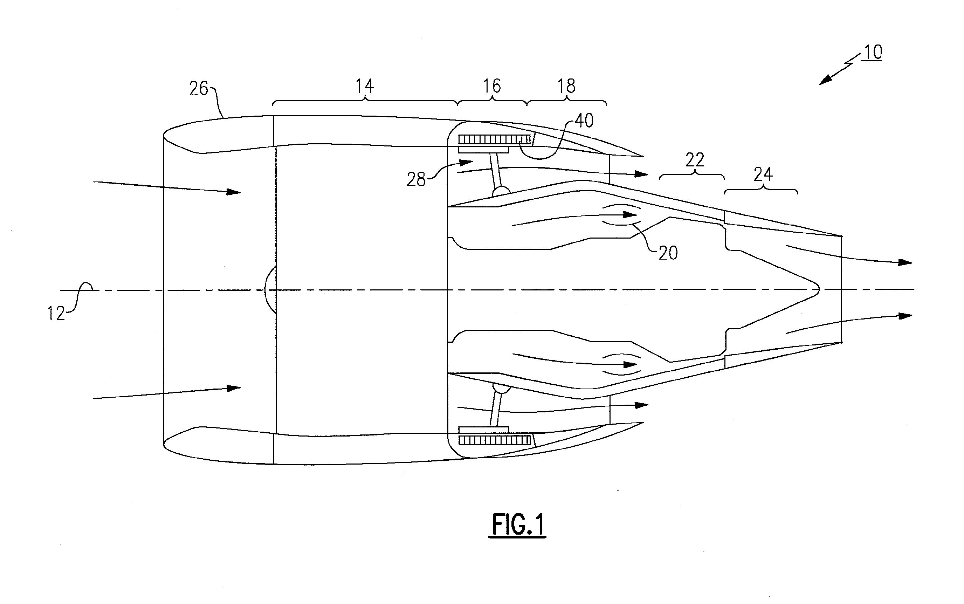

Referring to Figure 1, an example turbomachine, such as a gas turbine engine 10, is circumferentially disposed about an axis 12. The gas turbine engine 10 includes a fan 14, a low pressure compressor section 16, a high pressure compressor section 18, a combustion section 20, a high pressure turbine section 22, and a low pressure turbine section 24. Other example turbomachines may include more or fewer sections.

During operation, air is compressed in the low pressure compressor section 16 and the high pressure compressor section 18. The compressed air is then mixed with fuel and burned in the combustion section 20. The products of combustion are expanded across the high pressure turbine section 22 and the low pressure turbine section 24.

The fan 14 of the gas turbine engine 10 is received within a nacelle 26, which establishes an outer boundary of a bypass flow path 28. A cascade 40 is one of a plurality of cascades distributed about the axis 12. The cascade 40 is secured relative to the nacelle 26 and relative to the other cascades in the array. The cascade 40 is configured to be deployed into the bypass flow path 28 to provide a thrust reversing function.

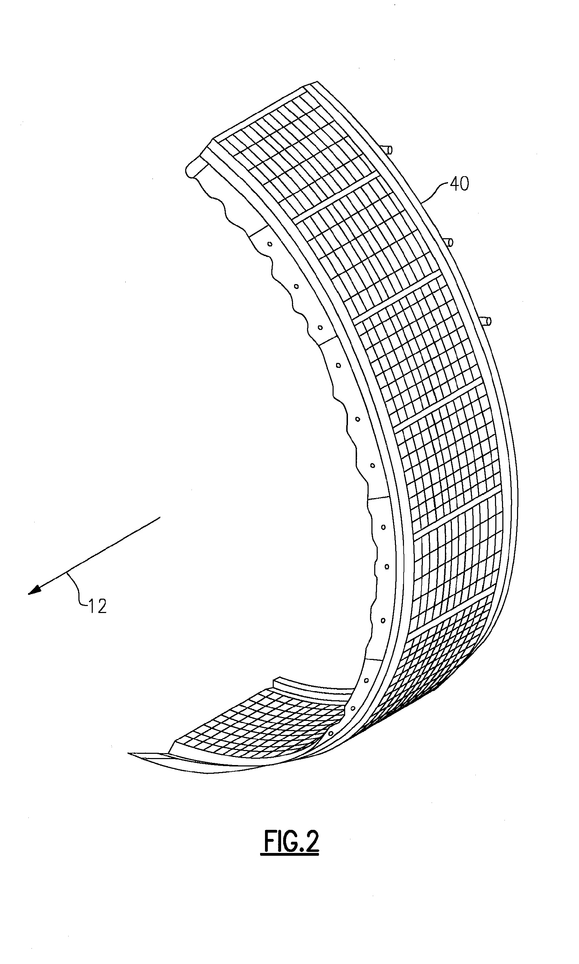

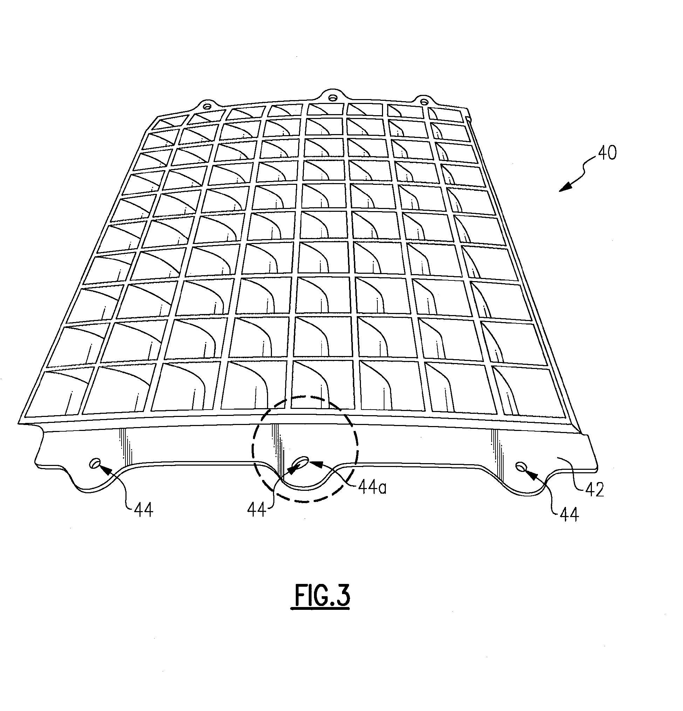

Referring now to Figures 2-4 with continuing reference to Figure 1, the example cascade 40 includes a flange 42 establishing a plurality of apertures 44. The flange 42 is considered an apertured portion of the cascade 40.

In this example, the apertures 44 are used to mount the cascade 40 within the gas turbine engine 10. The apertures 44 may receive a mechanical fastener, for example, that is used to secure the cascade 40. Over time, the apertures 44 of the example cascade 40 may become deformed because of the mechanical fastener vibrating and wearing against the flange 42 during operation of the gas turbine engine 10. The cascade 40 is a laminated component, such as a carbon fiber and epoxy part, which is particularly prone to such wear. In this example, one of the apertures 44, an aperture 44a, is a deformed aperture.

The examples described in this disclosure are not limited to a turbomachine having the two spool gas turbine architecture described. The examples may be used in other architectures, such as the single spool axial design, a three spool axial design, and in devices other than the gas turbine engine. That is, there are various types of turbomachines, and other devices having laminated components, that can benefit from the examples disclosed herein.

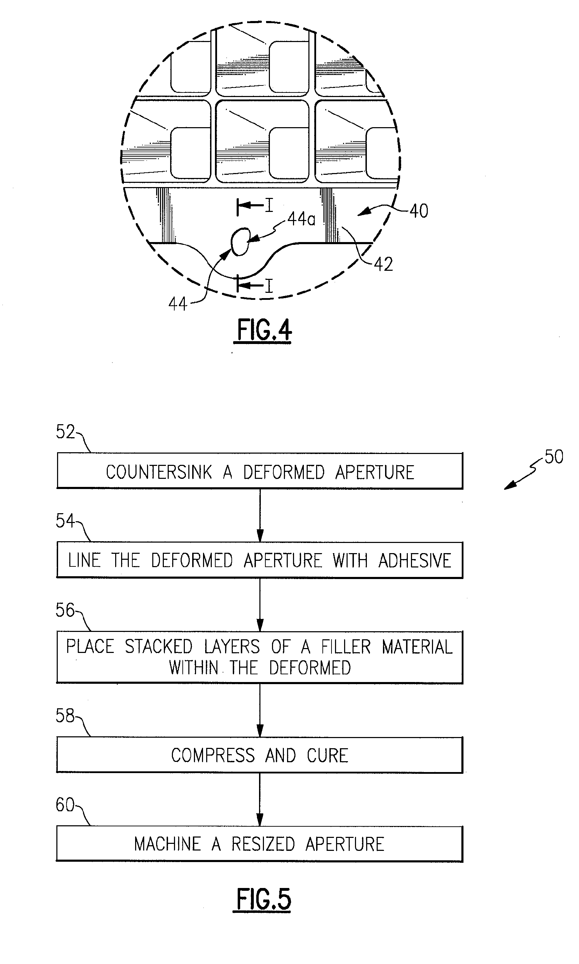

Referring to Figure 5, an example method 50 of replacing the deformed aperture 44a generally includes chamfering (or countersinking) the deformed aperture 44a at a step 52. The deformed aperture 44a is then lined with adhesive at a step 54. Next, at a step 56, a stack of filler material is placed within the deformed aperture 44a. The filler material and adhesive are then compressed and cured at a step 58. A replacement aperture is then drilled at a step 60.

In another example, the method 50 is used to reposition a misplaced, but not deformed, aperture. That is, the techniques described in this disclosure should not be limited to repairs or to replacing only deformed apertures, but could be used to establish other types of apertures. The techniques described in this disclosure could be used to provide a new aperture in place of a deformed aperture, a misplaced aperture, or any other type of cavity. In one example, the described techniques are used to establish an aperture in a newly manufactured component.

In this example, an operator may verify that there is no other structural damage such as a disbond in the flange 42 prior to performing the method 50. Voids or delaminations are example types of damage that could be observed. The operator may tap test and visually inspect the flange 42 surrounding the deformed aperture 44a to identify disbond. If disbond is identified, the method 50 may be abandoned and another more extensive and expensive repair technique may be used.

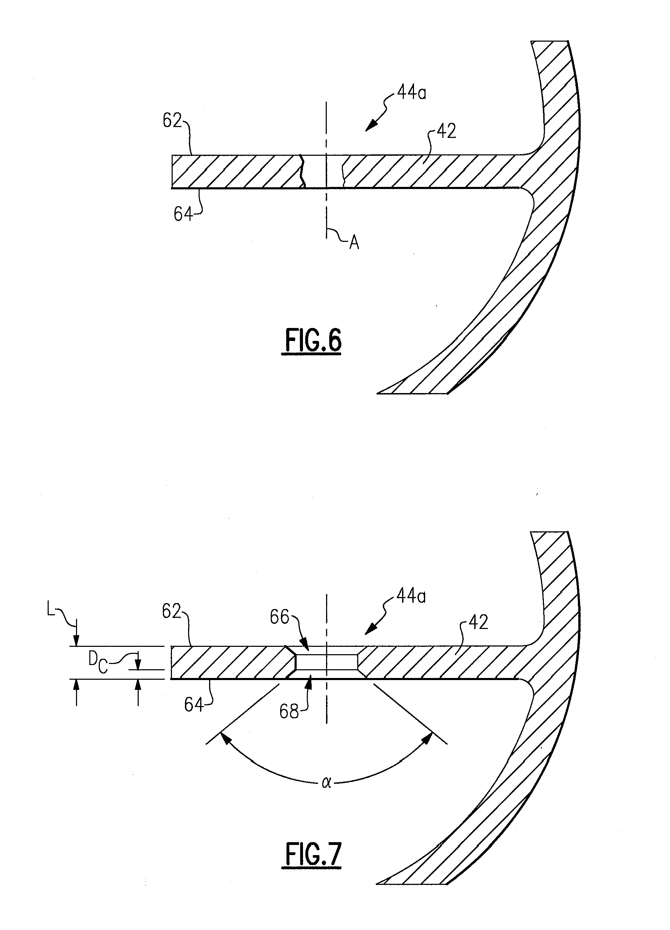

The steps of the method 50 will now be described in more detail with reference to the Figures 6-12 and continued reference to Figure 5.

As shown in Figures 6-7, the deformed aperture 44a extends along an axis A through the flange 42 from a first side 62 to a second side 64 that is opposite the first side 62. During the step 52 of chamfering the deformed aperture 44a, a first chamfer 66 is machined into the first side 62 of the flange 42, and a second chamfer 68 is machined into the second side 64 of the flange 42. In this example, the first chamfer 66 and the second chamfer 68 each have an axial depth Dc that is between 0.030 and 0.060 inches (1.02 and 1.52 millimeters) and an angle α between 80 and 150 degrees. Notably, the axial depth Dc of the chamfer is generally about 25 percent of a total length L of the deformed aperture 44a. Thus, as the thickness of the flange 42 increases, the axial depth Dc of the chamfer also increases.

After the chamfering of step 52, the flange 42 is typically cleaned and dried. Debris, water, and oil may affect the integrity of adhesive bonds. In one example, the cascade 40 is heated in an oven during the drying to remove water and oil from the cascade 40. For example, heating the cascade 40 in an oven at a temperature of between 160 and 200 degrees Fahrenheit (71 and 93 degrees Celsius) for one or more hours has been shown to remove adequate amounts of water and oil from the cascade 40. Hydrascopic materials such as aramid fiber-based composites may require longer drying cycles depending on the thickness of the flange 42. Other, larger, components may be heated under a heat lamp rather than in an oven. The cascade 40, and particularly the areas of the cascade 40 surrounding the deformed aperture 44a, are also cleaned with a cleaning solvent, such as alcohol, after the drying.

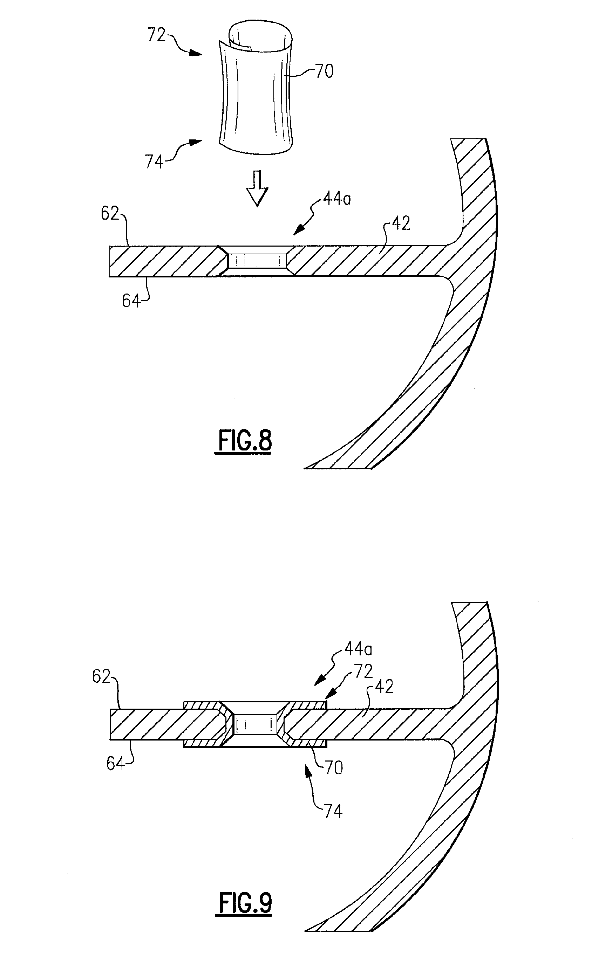

In this example, as shown in Figures 8-9, a rolled adhesive mat 70 is then inserted into the deformed aperture 44a during the step 54. After insertion, the adhesive mat 70 is folded and manipulated until the adhesive mat 70 lines the deformed aperture 44a. In this example, a first end portion 72 of the adhesive mat 70 is folded back over a portion of the first side 62, and a second end portion 74 of the adhesive mat 70 is folded back over a portion of the second side 64. Thus, the adhesive mat 70 directly contacts the first side 62 and the second side 64, as well as lining the chamfers 66 and 68, and lining the remaining portions of the deformed aperture 44a.

The example adhesive mat 70 is a supported film adhesive mat. A supported adhesive is used because utilizing an unsupported film adhesive may result in inconsistent thicknesses in the adhesive mat 70 when pressure is applied later in the step 58. The example adhesive mat 70 is also a thermoset adhesive. Knit supported film adhesive and unsupported film adhesive are also acceptable means of bond support.

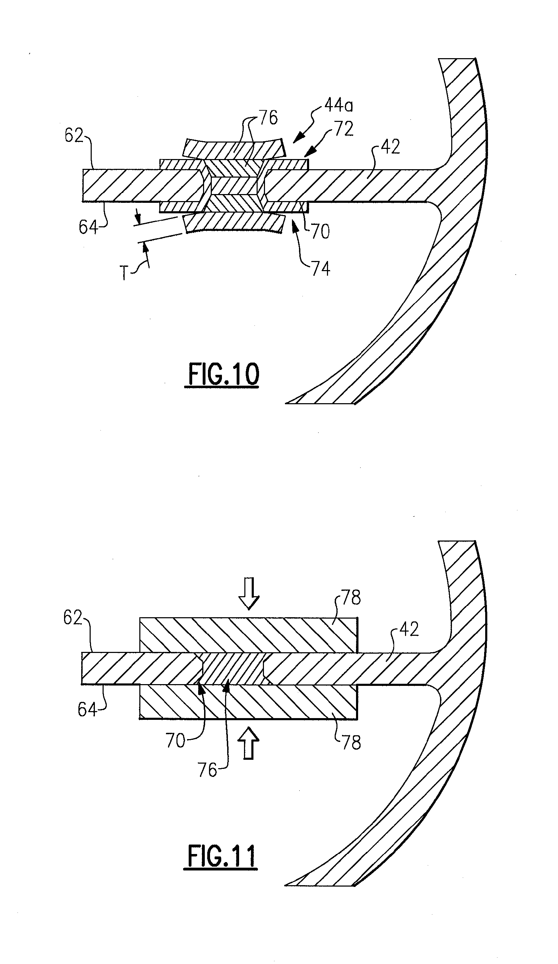

As shown in Figure 10, the layers 76 of a filler material are inserted into the deformed aperture 44a in the step 56. The thickness T of each of the layers 76 is less than the total length L of the deformed aperture 44a. Thus, more than one layer is required to fill the deformed aperture 44a. In this example, five separate layers 76 are used to fill the deformed aperture 44a. As can be appreciated from Figure 10, the width of the layers 76 varies depending on the axial position of the layers 76 within the deformed aperture 44a. Also, in this example, the width of each of the layers 76 is greater than the thickness T of the layers 76.

In this example, the layers 76 are cut from a sheet molding compound material, which is a calendered material having isotropic properties when cured. The layers 76 are each about 0.08 inches (2.03 millimeters) thick, and the flange 42 is about 0.2 inches (0.508 millimeters) thick. The filler material is comprised of short fibers in random orientation encapsulated with resin. The filler material is machine mixed and mostly free of segregation or voids.

In this example, the adhesion of the layers 76 to the walls of the deformed aperture 44a is enhanced through use of a separate adhesive resin system optimized for adhesive strength, rather than cohesive strength. The example adhesive resin is compatible with the cured laminate material of the flange 46 as well as the uncured filler material of the layers 76.

Notably, the layers 76 are arranged in a stacked relationship relative to each other, and the layers 76 are each aligned with the flange 42. That is, an upper surface and lower surface of the layers 76 are generally parallel to the first side 62 and second side 64 of the flange 42. The orientation of the layers 76 (when initially inserted into the deformed aperture 44a) is transverse the orientation of the adhesive mat 70 (when initially inserted into the deformed aperture 44a). In this example, the orientation of the layers 76 is opposite the orientation of the adhesive mat 70.

After the step 56 and prior to the step 58, some of the layers 76 extend axially past the first side 62, and some of the layers 76 extend axially past the second side 64. Placing enough of the layers 76 into the deformed aperture 44a so that some portion of the layers 76 extends axially past the first side 62 and the second side 64 helps reduce the likelihood of voids in the filler material after the filler material is compressed in the step 58.

Referring to Figure 11, in the step 58, the layers 76 are compressed into the deformed aperture 44a using clamps 78. During the clamping, the flange 42, the layers 76 of filler material, and the adhesive mat 70, are heated to cure the adhesive mat 70. The example method compresses the layers 76 in the direction normal to the stack of layers to induce expansion pressure along the outer perimeter of the layers 76 as the layers 76 thin due to compression. This expansion pressure promotes the intimate contact of the layers 76 of the filler material with the entire perimeter of deformed aperture 44a.

In one example, curing the adhesive mat 70 takes place by holding a temperature of about 350 degrees Fahrenheit (177 degrees Celsius) for between 60 and 90 minutes. During the cure, excess resin from the adhesive mat 70 and the layers 76 of the filler material will squeeze out of the aperture when the volume has been filled. This excess material is subsequently removed.

After the curing, the flange 42 is allowed to cool, while clamped, to around 150 degrees Fahrenheit (66 degrees Celsius). The clamps 78 are then removed from the flange 42. After the step 58, the deformed aperture 44a is completely filled with compressed layers 76 of filler material and the adhesive mat 70.

Portions of the adhesive mat 70, resin, and the layers 76 of filler material that extend axially past the first side 62 and the second side 64 are then removed. For example, the first side 62 and second side 64 may be sanded after the step 58 to remove raised portions of the layers 76.

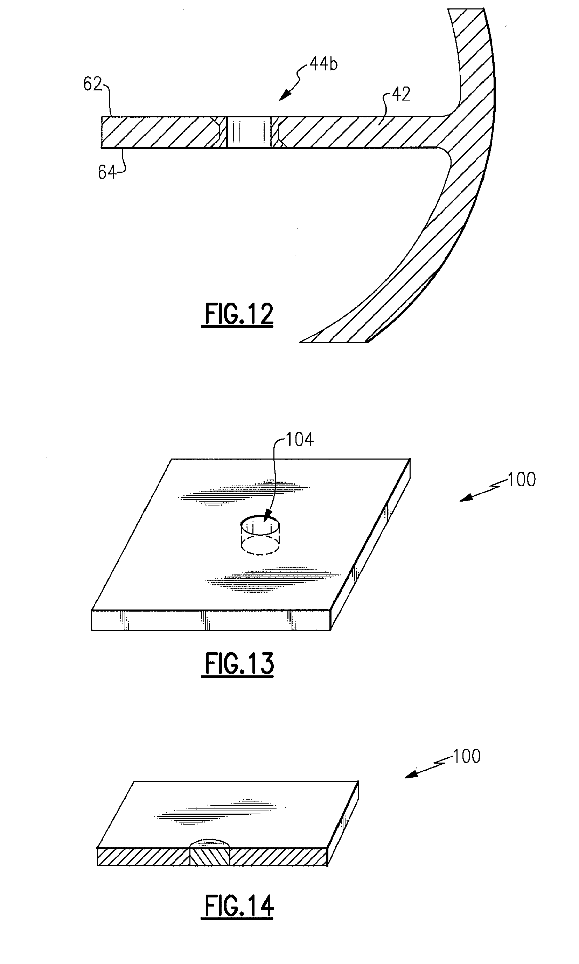

Referring now to Figure 12, a replacement aperture 44b is then machined into the flange 42 at the step 58. In this example, the replacement aperture 44b is established as least partially by the layers 76. A drilling process is used to machine the replacement aperture 44b, for example.

After machining the replacement aperture 44b, the first side 62 and the second side 64 are cleaned. A sealant is then applied to the flange 42. After the sealant is cured, the cascade 40 is reinstalled within the gas turbine engine 10 (Figure 1)

Referring to Figures 13 and 14 with continuing reference to Figure 12, in some examples, a test plate 100 is used to verify the integrity of the areas of the flange 42 surrounding the replacement aperture 44b. For example, during the method 50, a test aperture 102 of the test plate 100 may be replaced using the method 50. That is, the test aperture 102 is lined with an adhesive mat and then filled with a filler material arranged in a stacked relationship. The test plate 100 is clamped and cured to bond the filler material and the adhesive material to the test plate 100. Notably, the test plate 100 is made of the same material as the cascade 40.

The test plate 100 follows the cascade 40 through steps 52-58 of the method 50. The test plate 100 is then inspected after cutting through the test plate 100 at the location of the test aperture 102 that is filled with filler material and adhesive. Because the test aperture 102 is filled according to the method 50, the operator performing the replacing procedure can estimate the integrity of the repair to the deformed aperture 44a in the cascade 40 by examining the fill of the test aperture 102.

The preceding description is exemplary rather than limiting in nature. Variations and modifications to the disclosed examples may become apparent to those skilled in the art that do not necessarily depart from the scope of the invention. Thus, the scope of legal protection given to this disclosure can only be determined by studying the following claims.

## Claims

1. A method of replacing an aperture (44a) in a laminated component (40), comprising:
placing a plurality of layers (76) of a filler material into a first aperture (44a), the plurality of layers (76) of the filler material arranged in a stacked relationship relative to each other within the first aperture;
compressing the layers (76);
curing the filler material; and
establishing a second aperture (44b) that is at least partially defined by the filler material.

2. The method of claim 1, wherein the first aperture (44a) extends from a first surface (62) facing in a first direction to a second surface (64) facing in a second direction opposite the first direction, and preferably at least a portion of the layers (76) protrude past the first surface (62) and the second surface (64) before the compressing.

3. The method of claim 2, including lining the first aperture (44a) with a film adhesive (70) before the placing, the film adhesive extending to contact the first surface (62) and the second surface (64), wherein the film adhesive (70) is compatible with the layers (76) of the filler material and the laminated component (40).

4. The method of claim 2 or 3, wherein the first aperture (44a) extends along an axis, and at least some of the multiple layers (76) extend axially past the first surface (62) and at least some of the multiple layers (76) extend axially past the second surface (64) prior to the compressing.

5. The method of any preceding claim 2, 3 or 4, wherein the multiple layers (76) are aligned with the first surface (62) and the second surface (64).

6. The method of claim 1, including lining the first aperture (44a) with an adhesive 70) before the placing of the plurality of layers (76) of the filler material; preferably wherein the adhesive (70) is a supported film adhesive (70) compatible with the laminated component (40) and the filler material.

7. The method of any preceding claim, wherein the first aperture (44a) is a deformed aperture having an irregular shape and/or wherein the method comprises chamfering the first aperture prior to the placing.

8. The method of any preceding claim, wherein the layers (76) of the filler material are layers of a sheet molding compound; and/or wherein the layers (76) of filler material are comprised of short fibers in random orientation encapsulated with resin.

9. The method of any preceding claim, wherein the establishing comprises drilling the second aperture (44b).

10. The method of any preceding claim, wherein the laminated component (40) is a gas turbine engine cascade.

11. A laminated component (40), comprising:
a laminated component (40) having a plurality of plies of compressed reinforcement fibers held together by a resin matrix; and
an apertured portion of the laminated component, the apertured portion defining an aperture (44a) extending along an axis from a first surface (62) to an opposing second surface (64), wherein the apertured portion includes a plurality of layers (76) of a compressed filler material that are arranged in a stacked relationship relative to each other and adhesively secured to other portions of the laminated component, the compressed filler material being different from the compressed reinforcement fibers.

12. The laminated component of claim 11, wherein the filler material comprises a sheet molding compound; and/or wherein the layers (76) of filler material are comprised of short fibers in random orientation encapsulated with resin.

13. The laminated component of claim 11 or 12, wherein the laminated component (40) is a gas turbine engine cascade.

14. The laminated component of claim 11, 12 or 13, wherein at least a portion of the aperture (44a) is defined by the compressed filler material.

15. The laminated component of claim 11, 12, 13 or 14, wherein the orientation of the compressed filler material layers (76) is transverse to an adhesive mat (70) that is used to secure the compressed filler material to the remaining portions of the apertured portion (44a).
